# DEMANDE DE BREVET EUROPEEN

(11) **EP 0 577 489 A1**
(43) Date de publication de la demande: **05.01.1994**
(21) Numéro de dépôt: 93401657.7
(22) Date de dépôt: 28.06.1993
(51) Int. Cl.: G01K 3/04

(54) **Dispositif indicateur de cuisson**

(30) Priorité: 29.06.1992 FR 9207974
(71) Demandeur: R C L Société Anonyme, 13003 Marseille (FR)
(72) Inventeur: Lepez, Olivier, F-95 270 Viarmes (FR); Saget, Philippe, F-60 320 St Sauveur (FR); Minier, Chantal, Lucie, Paulette, née Viard-Gaudin, F-13 400 Aubagne (FR)
(74) Mandataire: Bourgognon, Jean-Marie

(57) **Abrégé**

Il comporte une matière colorante (4) et un support poreux (5), la matière colorante (4) migre sur le support poreux en regard d'une fenêtre (2).

## Description

La présente invention est relative aux dispositifs indicateurs de cuisson et, notamment, à ceux indiquant l'état de cuisson d'un aliment porté au moins à une température de cuisson pendant une certaine durée.

Dans Journal of Food Protection, volume 51, No 7, pages 542 à 546, juillet 1988, on décrit, à l'article intitulé "Color-Changing Indicator to Monitor the Time-Temperature History during Cooking of Meats" de G.J.Favetto et consorts, un indicateur comportant une matière colorante sur support poreux et permettant de représenter le produit de la durée de cuisson par la température de cuisson. L'indicateur lui-même est constitué de disques en papier-filtre trempés dans une solution dont la couleur se modifie en fonction de ce produit. Cet indicateur a deux inconvénients. La réaction de Maillard se produit également à la température ambiante, de sorte que la couleur de l'indicateur reflète non seulement le produit de la température de cuisson par la durée de cuisson, mais également le produit d'une température inférieure à la température de cuisson, par exemple de la température ambiante, par la durée pendant laquelle la viande a été portée à cette température inférieure à la température de cuisson. Pour y remédier, les auteurs proposent de stocker les indicateurs à -18°C. Il s'agit là d'une contrainte insupportable dans la vie courante. L'autre inconvénient est que l'état de cuisson doit être apprécié en fonction de la modification, pourtant progressive, de l'intensité de la coloration avec le temps. L'appréciation exacte de l'instant où l'état de cuisson correct a été atteint est ainsi rendue difficile.

Au EP-A-454°413, on décrit un indicateur de durée activée par la température utilisant la fusion d'une substance solide pour obtenir un changement de coloration. En devenant liquide, la substance, comme de la cire, migre sur un support qui change de couleur par un effet d'interférence lumineuse. Cet effet d'interférence ne peut être obtenu que par des structures complexes décrites au U.S.-A-4°994°314 et suivant une loi qui ne l'est pas moins. Au FR-A-2°244°984, on rappelle les inconvénients des dispositifs indicateurs de l'écoulement d'un durée comportant des mares de liquide. On leur préfère un dispositif, plus simple à manipuler, qui comporte une matière poreuse mouillable contenant un fluide de saturation, une mèche capable de provoquer le déplacement du fluide de saturation de la matière poreuse et un dispositif réglant la migration du fluide à la mèche, ainsi qu'un dispositif indiquant la présence du fluide dans la mèche. Parmi les très nombreux modes de réalisation, l'un prévoit que la matière poreuse contient une matière solide à la température de stockage et qui fond à la température du travail. Cette matière n'est pas un colorant. Dans un autre mode de réalisation, le fluide de saturation contient en dissolution un corps colorant; c'est un liquide avec ses inconvénients, sauf s'il est mis sous la forme spéciale et compliquée d'un patin poreux, ou autrement séparé de la mèche.

L'invention pallie ces inconvénients par un dispositif indicateur de l'état de cuisson d'un aliment porté au moins à une température de cuisson, qui est insensible à la température à laquelle l'aliment a été exposé avant la cuisson, ainsi qu'à la durée de cette exposition, qui ne nécessite plus une appréciation d'intensité de couleur et qui, tout en restant simple à manipuler, est facile à fabriquer. Ce dispositif est défini à la revendication 1.

Tant que la température à laquelle l'aliment a été exposé reste inférieure au point de fusion de la matière colorante, le dispositif indicateur ne se modifie pas et ne contient que des solides. Dès que cette température devient égale au point de fusion de la matière colorante, celle-ci à l'état liquide migre le long du trajet de migration sans en être empêché par une feuille imperméable et sans avoir à sortir au préalable d'une matière poreuse destiné à en régler la migration. Lorsqu'elle atteint un point donné de ce trajet, il s'est écoulé un certain temps depuis que l'aliment est porté à la température de cuisson et cela permet d'apprécier l'état de cuisson de l'aliment par l'apparition brusque d'une coloration en un point donné et non plus par la comparaison de deux intensités de coloration en un même point.

Suivant un mode de réalisation avantageux, le support est oblong et la pastille est déposée à l'une des extrémités du support. Dans un autre mode de réalisation, le support et la pastille sont enveloppés dans une enveloppe commune, opaque, de préférence étanche à la matière colorante liquide et munie d'une fenêtre transparente en regard d'un point du trajet de migration autre que le point de dépôt de la pastille. Lorsqu'une coloration apparaît derrière cette fenêtre, l'état de cuisson souhaité est atteint. On peut d'ailleurs prévoir plusieurs états de cuisson auxquels correspondent plusieurs fenêtres se succédant le long du trajet de migration.

D'une manière générale, le dispositif indicateur de l'état de cuisson suivant l'invention peut être utilisé avec avantage dans toute opération nécessitant un traitement thermique à une température constante donnée, pendant une durée donnée. L'invention s'applique à la cuisson des aliments en milieu liquide, tels que dans l'eau, l'huile, le lait ou toute solution à base de l'un ou de plusieurs de ces liquides. Les aliments susceptibles d'être cuits dans ces liquides peuvent être des pâtes, du riz, des semoules, des oeufs, des pommes de terre, des carottes, des produits mijotés et analogue.

Suivant le conditionnement de l'aliment à cuire, le dispositif pourra être solidaire ou non du produit.

C'est ainsi que dans le cas des aliments cuits dans un emballage de cuisson (tels que sachets;...) le dispositif pourra être soit fixé directement sur un côté de l'emballage, soit libre flottant à la surface du liquide de cuisson, relié ou non à l'emballage de cuisson par une liaison souple, telle qu'une ficelle.

Le dispositif peut également être utilisé dans le cas de cuissons d'aliments sans emballage de cuisson, il sera alors disposé à la surface du liquide de cuisson, sans aucune attache extérieure.

Le choix des matériaux de constitution de dispositif est donné par la durée de cuisson désirée. On choisira un couple (colorant seul ou mélange colorant, support poreux coloré ou non) donnant une vitesse de migration relativement rapide pour les temps de cuisson courts (moins de 3 minutes).

En revanche, on choisira un couple (colorant seul ou mélange colorant, support poreux coloré ou non) donnant une vitesse de migration relativement lente dans le cas des temps de cuisson long.

Le support sur lequel le mélange colorant migre est poreux.

Le support poreux permettant la migration peut être:
- un gel de silice
- de la cellulose
- de l'oxyde d'aluminium
- un papier filtre ou un papier buvard
- ou toute autre support poreux gel ou solide sous forme de poudre coloré ou non permettant la diffusion par capillarité d'un produit coloré.

Ce support peut donc être par exemple une plaque de chromatographie sur couche mince (CCM).

Le support poreux est alors sous la forme d'une couche mince qui peut avoir une épaisseur de 0,25 mm à 2 mm.

Cette couche mince est fixée sur un support inerte par rapport au colorant et au support poreux qui peut être:
- une feuille d'aluminium,
- une feuille de plastique,
- une plaque en verre,
- etc...

Au lieu d'utiliser le support poreux sous forme de couche mince, on peut l'utiliser pur. Le colorant ou mélange colorant migre alors dans la masse du support poreux.

Le colorant ou le mélange colorant indiquant le degré d'avancement de la cuisson a les propriétés suivantes:
- il est solide à température ambiante
- il a une température de fusion inférieure à la température de cuisson désirée,
- il est compatible d'un point de vue alimentaire.

Suivant les cas, le colorant peut être utilisé pur, ou en solution. Dans le cas de l'utilisation en solution, c'est le solvant qui devra avoir les propriétés énoncées précédemment.

### Pour une utilisation dans l'eau bouillante (100°C)

Il faut utiliser un solvant compatible d'un point de vue alimentaire tel que par exemple:
- polyéthylène glycol (1500) Tf = 45-50°C
- acide laurique Tf = 44-46°C
- acide palmitique Tf = 61-64°C
- acide stéarique Tf = 69-71°C
- sorbitol Tf = 94-96°C

Tous ces produits seront à l'état liquide à 100°C.

Les colorants utilisés dans ces solvants sont tous les colorants autorisés par les réglementations alimentaires tels que par exemple:

E 100 - Curcumine (ou tumeric yellow) (CI 75300) (jaune)

E 101 - Riboflavine (ou vitamine B2, ou lactoflavine) (jaune-orange)

E 102 - Tartrazine (ou acide Yellow 23, ou FD et Ce Yellow 5 ou food Yellow 4) (CI 19140) (jaune)

E 104 - Jaune de quinoléine (CI 47005) (jaune)

E 123 - Amarante (acid red 27) (CI 19140) (rouge)

E 127 - Erythrosine B (food red 14, Ci acid red 51) (CI 45430) (rouge)

E 120 - Cochenille, ou acide carminique (CI 75470) (rouge)

E 124 - Rouge cochenille (CI 16255) (rouge)

E 132 - Indigotine (ou carmin d'Indigo, ou acid blue 74, CI food blue 1, FD et C blue 2) (CI 73015) (bleu)

E 131 - Bleu patenté V (CI 42051) (bleu)

E 142 - Lissamine (ou acid green 50) (CI 44090) (vert)

E 140 et E 141 - Chlorophylles et complexes cuivriques des Chlorophylles (CI 1249 et CI 75810) (vert)

### Pour utilisation dans de l'huile (T=200 à 300°C)

Deux des colorants précédemment énoncés sont susceptibles d'être utilisés purs (sans solvant):
- Riboflavine : Tf = 290°C
- Curcumine : Tf = 170-175°C

Ou tous les colorants énoncés précédemment ou tout autre colorant alimentaire avec comme solvant:
- l'acide tartrique : Tf = 166-169°C
- Glucose : Tf = 146°C
- Saccharose : Tf = 169-170°C

Le support poreux peut avoir une forme quelconque et peut se décomposer en deux zones, une zone de réservoir sur laquelle est fixée la pastille et une zone de migration sur laquelle le mélange colorant migre lorsqu'il est à l'état fondu. La zone de migration peut avoir une forme rectangulaire ou circulaire ou autre.

Lorsque la zone de migration est rectangulaire, elle se présente avantageusement sous la forme d'une fine bandelette, de manière à obtenir un front homogène de progression de la matière colorante. Néanmoins, la bandelette de la zone de migration peut être plus large au point de contact avec la zone réservoir, puis aller en se rétrécissant. Ceci permet d'obtenir un effet de concentration de la matière colorante et d'augmenter ainsi la durée d'utilisation du dispositif.

La zone de réservoir peut être plus large que la zone de migration. La forme de cette zone peut être rectangulaire ou triangulaire ou quelconque, Le contact entre la zone de réservoir et la zone de migration a lieu de préférence à une extrémité de la bande de migration.

Lorsque la zone de migration est circulaire, le support poreux est un disque, la zone de réservoir étant située au centre du disque. La direction de migration de la matière colorante est ainsi radiale.

Pour préparer un dispositif suivant l'invention on peut, dans le cas d'une migration dans la masse, placer d'abord dans le bas d'une enveloppe étanche entourant le support poreux, une pastille de matière colorante, puis remplir le reste de l'enveloppe du support poreux.

Pour déposer la pastille de matière colorante, dans le cas d'un support en couche mince, on peut procéder de diverses façons :
1. Une pastille de mélange colorant ayant la forme de la zone de réservoir a été préalablement préparée. Une face de cette pastille est chauffée de manière que cette face soit semi-liquide/solide, puis appliquée sur la zone réservoir.
2. Le mélange colorant a été porté à une température légèrement supérieure à sa température de fusion. Le mélange est alors déposé par dosage, et au contact de l'air se solidifie.
3. Le mélange colorant étant fondu, la zone de réservoir du support poreux est plongée, puis immédiatement retirée du mélange colorant. Une faible quantité de mélange colorant s'est alors déposée sur la zone de réservoir. La température s'abaissant, ce mélange colorant déposé se solidifie. L'opération peut alors être renouvelée autant de fois que nécessaire jusqu'à l'obtention d'une quantité de mélange colorant suffisante pour le dispositif.

L'ensemble support poreux et mélange colorant peut être éventuellement fixé sur un support rigide de forme rectangulaire ou circulaire.

Le mélange colorant fixé sur la zone de réservoir peut être recouvert d'une feuille d'aluminium, de téflon, ou analogue pour empêcher que, lorsque le mélange colorant est à l'état fondu, celui-ci ne se répande dans toute la capsule du dispositif, et l'obliger à emprunter le passage en direction de la zone de migration.
4. Dans un autre mode de réalisation, on utilise une pièce rigide comme par exemple une pièce moulée en matériau thermoplastique, dans laquelle on évide une cavité faisant office de réservoir.

Cette cavité est alors remplie par coulage et refroidissement à l'air du mélange colorant.

Le support poreux est ensuite déposé en positionnant l'une de ses extrémités à la base du réservoir.

Dans le souci de faciliter le positionnement du support poreux sur la pièce rigide, on peut se servir d'une empreinte correspondant à la forme du support évidé à la surface de la pièce moulée.

La visualisation de la migration du mélange colorant se fait, soit directement sur la face externe du support dans le cas de l'utilisation du support poreux pur, soit sur la face interne (en contact avec le mélange colorant), à condition d'ajourer des orifices de visualisation dans la pièce rigide.

Dans le cas de l'utilisation d'un support poreux utilisé pur, on peut, grâce à une pièce moulée du type à orifices de visualisation, bénéficier d'une visualisation de la migration sur les deux faces.

L'ensemble support poreux, mélange colorant, support rigide et matériau réservoir est encapsulé dans une enveloppe étanche. Cette enveloppe étanche, thermorésistante et transparente peut être par exemple en polyéthylène ou tout autre matériau remplissant les conditions de résistance à la température d'utilisation et d'opacité.

Dans le cadre d'une réalisation telle que décrite au paragraphe 4 ci-dessus, on utilise de préférence le même matériau pour la pièce rigide et pour l'enveloppe étanche. Dans ces conditions, l'étanchéité du réservoir est garantie par une soudure totale du film sur la surface de la pièce rigide.

La visualisation de l'avancement de la cuisson est donnée par la progression du mélange colorant dans la zone de migration.

Le dispositif est recouvert dans son ensemble, à l'intérieur ou à l'extérieur de l'enveloppe étanche d'une feuille de matériau percée d'une ou plusieurs fenêtres permettant la visualisation de la progression du mélange colorant. Sur cette feuille sont imprimées les informations nécessaires à l'identification des différents états de cuisson. La visualisation peut être réalisée par exemple à l'aide de graduations ou à l'aide de fenêtres.

Au dessin annexé, donné uniquement à titre d'exemple :
la figure 1 est une vue avec arrachement partiel d'un mode de réalisation d'un dispositif suivant l'invention,
la figure 2 est une vue d'un autre mode de réalisation, et
la figure 3 est une vue en coupe schématique d'une variante de réalisation.

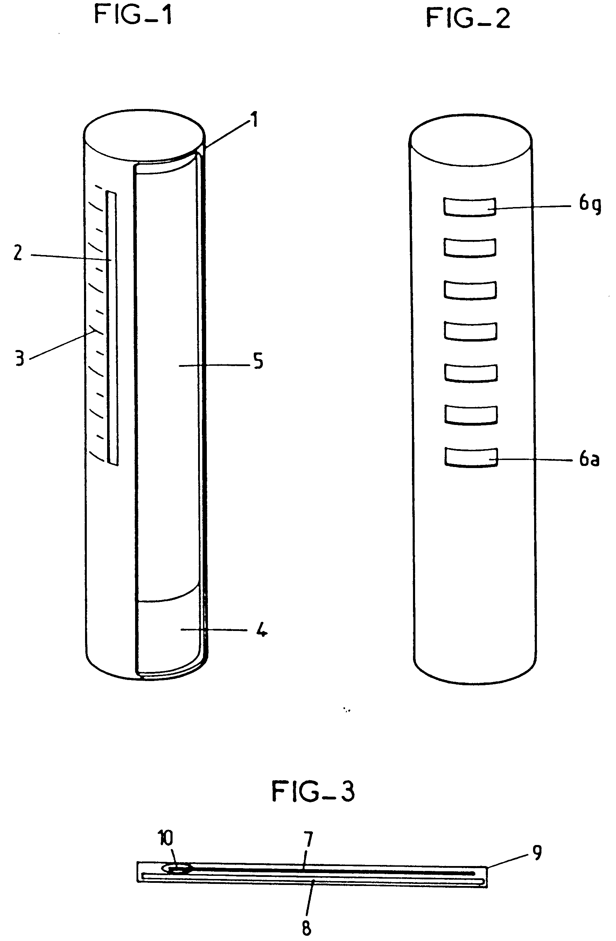

Le dispositif représenté à la figure 1 se compose d'une enveloppe 1 en polyéthylène munie d'une fenêtre 2 à graduations 3 et dans le fond de laquelle se trouve une pastille 4 de tartrazine. Au-dessus de la pastille s'étend une colonne 5 de gel de silice.

Dans la variante de la figure 2, il est prévu plusieurs fenêtres 6ₐ à 6_{g} successives, le long du dispositif.

A la figure 3, un support poreux 7 en cellulose est posé sur une feuille 8 de matière plastique, le tout étant enveloppé d'une enveloppe 9. Une solution d'acide carminique dans de l'acide palmitique est déposée à l'une des extrémités du support poreux 7 et est recouverte d'une feuille 10 de téflon.

## Revendications

1. Dispositif indicateur de l'état de cuisson d'un aliment porté au moins à une température de cuisson, comportant une pastille (4) en une matière solide ayant un point de fusion inférieur à la température de cuisson, un support poreux (5) disposé de manière que la matière de la pastille (4) s'y déplace à l'état liquide le long d'un trajet de migration, et des moyens de dissimulation à la vue du trajet du point en regard de la pastille en un autre point, caractérisé en ce que la pastille (4) est en contact direct avec le support et la matière constitutive de la pastille (4) est un colorant ayant un point de fusion qui est supérieur à la température ambiante.

2. Dispositif suivant la revendication 1, caractérisé en ce que la pastille est constitué d'un colorant en solution dans un solvant, le solvant ayant un point de fusion compris entre la température ambiante et la température de cuisson.

3. Dispositif suivant la revendication 1 ou 2, caractérisé en ce que le point de fusion de la matière constitutive de la pastille est compris entre 45°C et la température de cuisson.

4. Dispositif suivant l'une des revendications précédentes, caractérisé en ce que le solvant est du polyéthylène glycol, de l'acide laurique, de l'acide palmitique, de l'acide stéarique, du sorbitol, de l'acide tartrique, du glucose ou du saccharose.

5. Dispositif suivant l'une des revendications précédentes, caractérisé en ce que le support (5) et la pastille (4) sont enveloppés dans une enveloppe (1) commune opaque et munie d'une fenêtre (2) transparente en regard dudit point du trajet de migration autre que le point où se trouve la pastille (4).

6. Dispositif suivant la revendication 5, caractérisé en ce que l'enveloppe (1) est étanche à la matière colorante liquide.

7. Dispositif indicateur de l'état de cuisson d'un aliment porté au moins à une température de cuisson, comportant une pastille (4) en une matière solide ayant un point de fusion inférieur à la température de cuisson, un support poreux (5) disposé de manière que la matière de la pastille (4) s'y déplace à l'état liquide le long d'un trajet de migration, et des moyens de dissimulation à la vue du trajet du point en regard de la pastille en un autre point, caractérisé en ce que la pastille (4) emplit une cavité faisant office de réservoir et ménagée dans un support rigide.

8. Dispositif suivant la revendication 1, caractérisé en ce qu'un film étanche est soudé sur la surface du support rigide.

9. Dispositif suivant la revendication 2, caractérisé en ce que le film fait partie d'une enveloppe étanche et thermorésistante qui encapsule le support rigide, le support poreux et la pastille.

10. Dispositif suivant l'une des revendications précédentes, caractérisé en ce que le support poreux et un gel de silice, de la cellulose ou de l'oxyde d'aluminium.
